# EUROPEAN PATENT SPECIFICATION

(11) **EP 1 768 432 B1**
(45) Date of publication and mention of the grant of the patent: **02.06.2010**
(21) Application number: 06122908.4
(22) Date of filing: 17.07.1998
(51) Int. Cl.: H04W 52/02

(54) **Power save in a digital wireless telephone system**
Energieeinsparung in einem digitalen drahtlosen Telefonsystem
Economie d'énergie dans un système numérique de téléphone sans fil

(30) Priority: 05.08.1997 JP 22207997; 28.11.1997 JP 34187997
(43) Date of publication of application: 28.03.2007
(62) Divisional of application: 98113355.6
(73) Proprietor: SOFTBANK MOBILE Corp., Minato-ku Tokyo (JP)
(72) Inventor: Higuchi, Kazuhisa, Adachi-ku, Tokyo (JP); Kamataki, Hideki, Chofu-shi, Tokyo (JP)
(74) Representative: Gille Hrabal Struck Neidlein Prop Roos

(56) References cited:
- WO-A-95/12931
- WO-A-96/08941
- US-A- 5 301 225

## Description

### BACKGROUND OF THE INVENTION

### Field of the Invention:

The present invention relates to a method for reducing the power consumption of a digital wireless telephone system.

### Description of the Related Art:

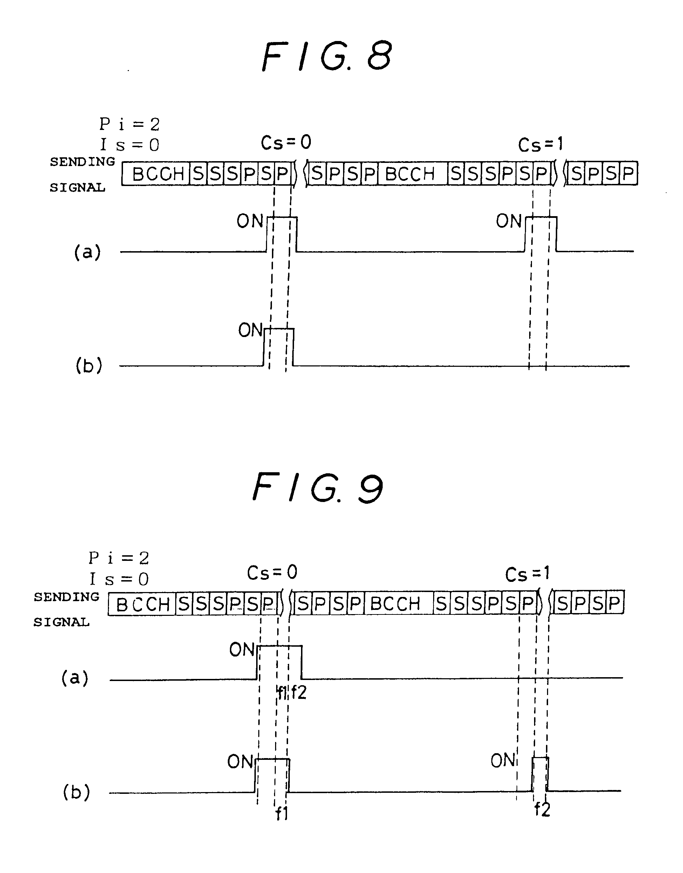

In the digital wireless telephone system, since the mobile station uses a battery as its own power source, it is very important for the mobile station to reduce its power consumption. In this connection, various types of techniques have been developed to reduce the power consumption of the mobile station. Of these techniques, a so-called battery saving technique has been widely used, in which technique the mobile station has its reception portion intermittently operated in its standby mode to reduce its power consumption. Fig. 8(a) shows a conventional intermittent reception operation of the mobile station in its standby mode. Transmitted at predetermined time intervals in a sending signal used in the conventional intermittent reception operation of the mobile station are time slots each containing paging information of the mobile station. The reception portion of the mobile station has its own power source turned on in timed relationship with paging channels (i.e., P) ; and turned off in the remaining period of time. For example, in the Digital Mobile-Phone System Standards (i.e., RCR STD-27) prepared by the Denpa Sangyo kai (i.e., ARIB), there is stipulated the intermittent reception operation of the mobile station for saving its battery power in the standby mode in a radio zone. An interval used in such intermittent reception operation stipulated in the above Standards is equal to one superframe interval (i.e., 720 milliseconds) at maximum.

However, in the conventional intermittent reception operation with such one superframe interval at maximum, it is not possible to increase a continuous standby period of time, and, therefore often not possible to increase the efficiency of the intermittent reception operation. Further, the conventional intermittent reception operation with such one superframe interval at maximum is disadvantageous in that it can not set arbitrarily the continuous standby period of time.

From the International application WO 95/12931, there is already known a method for reducing the power consumption of a digital wireless telephone system.

### SUMMARY OF THE INVENTION

Under such circumstances, the present invention was made. Consequently, it is an object of the present invention to provide a method , in which the interval in an intermittent reception operation of a mobile station is increased, so that a continuous standby period of time of the mobile station is increased to reduce power consumption of the mobile station.

According to a first aspect of the present invention, the above object of the present invention is accomplished by providing:
a method for reducing the power consumption of a digital wireless telephone system comprising a mobile station provided with a reception
portion, the power source of which being turned on in timed relationship with a paging channel contained in a sending signal issued from a telephone exchange to the mobile station through a base station, and turned off in the remaining period of time , this operation being referred hereafter as intermittent standby operation, the method comprises the steps of:
   sending out a paging message from the telephone exchange in a group of paging channels in a group of superframes, for which groups the mobile station is waiting, the group of paging channels and the group of superframes being respectively referred to as the paging channel group and the intermittent superframe reception group of the mobile station,
   receiving broadcast information by the mobile station, and deciding that the intermittent standby operation is able to be performed by the mobile station or not based on extension information in the broadcast information, the extension information being defined as an extension information element length and an intermittent standby information element comprising an intermittent standby superframe counter,
   performing the intermittent standby operation in the intermittent superframe reception group by the mobile station based on preset intermittent standby operation information, containing a preset intermittent standby superframe interval, in the mobile station, when a result of the decision is affirmative;
   turning on the power source of the reception portion of the mobile station to measure a perch channel in a peripheral zone each time the superframe appears.

According to a second aspect of the present invention, the above object of the present invention is accomplished by providing a method as set forth in the first aspect of the present invention, wherein an intermittent standby superframe counter information element in the extension information element contained in the broadcast information is set by an intermittent standby superframe counter selling means of the telephone exchange, the intermittent superframe reception group of the mobile station is analysed by an intermittent superframe reception group analysing means on the basis of a location information and a subscribers information read out from a subscribers information memory, and the paging message in the intermittent superframe reception group and the paging channel group, for which groups the mobile station is waiting, is sent out by a message sending means and the intermittent standby operation information containing a preset intermittent standby superframe interval being stored in a memory means of the mobile station.

### BRIEF DESCRIPTION OF THE DRAWINGS

Fig. 1 is a schematic block diagram of the digital wireless telephone system of a first example ;
Fig. 2 is a schematic block diagram of the contents of broadcast information used in the first example shown in Fig. 1;
Fig. 3 is a schematic block diagram of the information element of the intermittent standby information used in the first example shown in Fig. 1;
Fig. 4 is a schematic block diagram illustrating the operation of the superframe counter of the intermittent standby information used in the first example shown in Fig. 1;
Fig. 5 is a flowchart illustrating an operation performed after the request-to-receive is made to the mobile station in the first example shown in Fig. 1;
Fig. 6 is a flowchart illustrating an operation performed after the power source of the mobile station is turned on, in which operation the mobile station enters its standby mode in the first example shown in Fig. 1;
Fig. 7 is a flowchart illustrating an operation performed after completion of telecommunication of the mobile station, in which operation the mobile station enters in its standby mode in the first example shown in Fig. 1;
Fig. 8(a) is a timing chart illustrating the conventional intermittent reception operation of the mobile station in its standby mode;
Fig. 8(b) is a timing chart illustrating the intermittent reception operation of the mobile station in its standby mode in the first example shown in Fig. 1;
Figs. 9(a) and 9(b) are timing charts each illustrating the intermittent standby operation based on measurement of the peripheral zone when the mobile station performs its high-efficiency intermittent reception operation in the first example shown in Fig. 1, wherein Fig. 9 (a) shows the perch channels measured at two frequencies (i.e., f1 and f2) in the peripheral zone immediately after receipt of information of the paging channel (i.e., PCH), and Fig. 9(b) shows the perch channels measured at a first and a second frequency (i.e., f1 and f2) in a first and a second superframe, respectively;
Fig. 10 is a schematic block diagram of the digital wireless telephone system of a second example that corresponds to the embodiment of the present invention;
Fig. 11 is a schematic block diagram of the digital wireless telephone system of a third example ;
Fig. 12 is a schematic block diagram of the digital wireless telephone system of a fourth example;
Fig. 13 is a diagram illustrating the information element of the intermittent standby superframe counter in the second example shown in Fig. 10; and
Fig. 14 is a diagram illustrating the information element of the intermittent standby superframe interval in the fourth example shown in Fig. 10.

### DESCRIPTION OF THE PREFERRED EMBODIMENTS

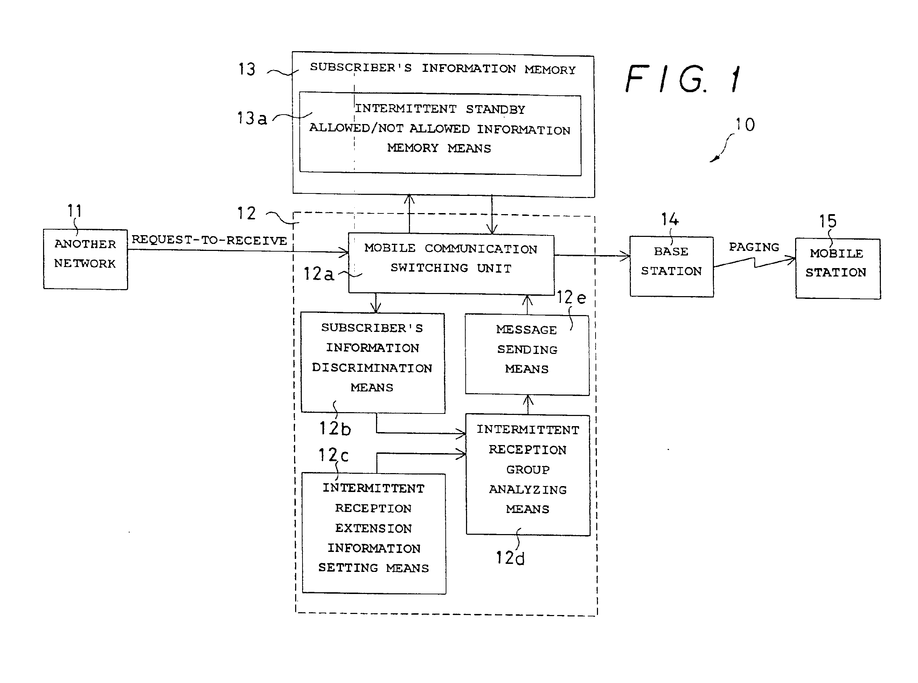

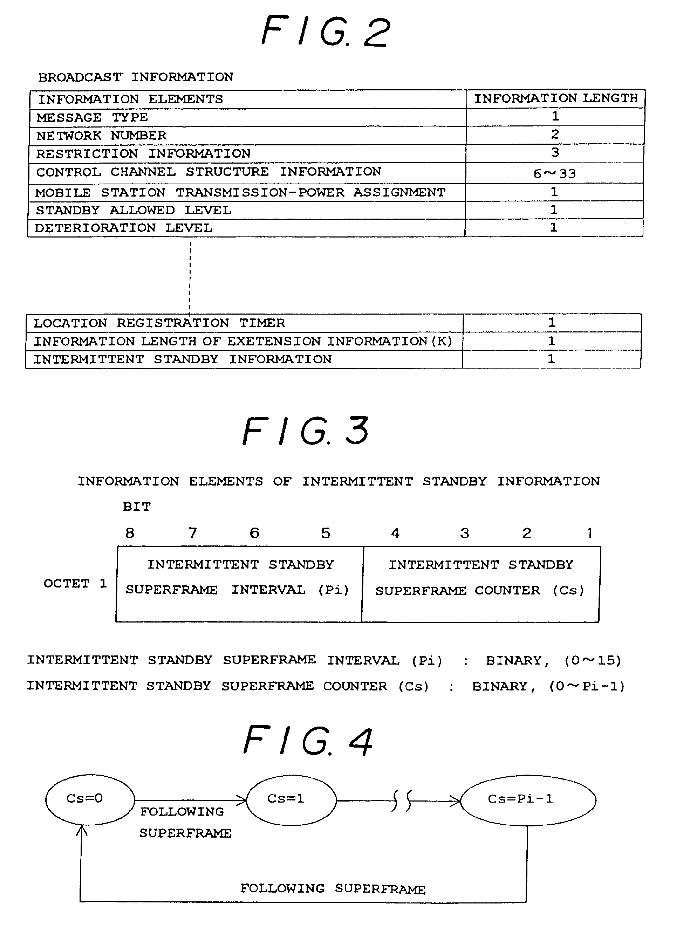

Hereinbelow, the present invention will be described in detail with reference to the accompanying drawings, in which Figs. 1 to 4 shows a first example of a digital wireless telephone system 10 . More particularly, in the drawings: Fig. 1 is a schematic block diagram of the digital wireless telephone system 10 of the first example; Fig. 2 is a schematic block diagram of the contents of broadcast information used in the first example; Fig. 3 is a schematic block diagram of the information element of the intermittent standby information used in the first example; and, Fig. 4 is a schematic block diagram illustrating the operation of the superframe counter of the intermittent standby information used in the first example.

In Fig. 1 showing the digital wireless telephone system 10: the reference numeral 11 denotes another network; 12 a telephone exchange; 13 a subscriber's information memory; 14 a base station; and 15 a mobile station. The telephone exchange 12 comprises: a mobile communication switching unit 12a for radio-controlling the base station 14 having a radio zone in which the mobile station 15 stays, the mobile communication switching unit 12a also providing a telecommunication service to the mobile station 15 through the base station 14; a subscriber's information discrimination means 12b for judging whether or not the intermittent standby operation of the first example is available, on the basis of information retrieved from a subscriber's information memory 13; an intermittent reception extension information setting means 12c for setting intermittent standby information contained in information (i.e., BCCH) which should be broadcast to all the mobile stations 15 staying in a cell or radio zone; an intermittent reception group analyzing means 12d for analyzing an intermittent reception group of the mobile stations 15 having received such information (i.e., BCCH) ; and, a message sending means 12e for sending paging information through the mobile communication switching unit 12a.

The subscriber's information memory 13 is a memory, which functions as a data base in the network, records both the subscriber's information and location registration information in order to provide a service to the mobile station 15, and is provided with an intermittent standby allowed/not allowed information memory means 13a for recording availability of a high-efficiency intermittent standby operation.

In general, a control signal used in telecommunication between the network and the mobile station 15 is of a one-way channel or of a two-way channel. Such control signal is constructed of: a broadcast channel (i.e., BCCH), which is a one-way channel for broadcasting the control information to the mobile stations 15 in order to transfer information as to an information channel structure necessary for location registration and also information as to the system 10; a paging channel (i.e., PCH), which is a one-way channel for broadcasting the same information to the mobile stations 15 in a paging area; and, a separate cell channel (i.e., SCCH) for transferring both the information necessary for connection control and the control information other than the paging information.

As shown in Fig. 2, the contents of the broadcast information message which is broadcast from the network to the mobile station 15. Such contents comprise a plurality of information elements, for example such as: message type; network number; restriction information; control channel structure information; and, like information elements, each of which has a predetermined information length in octet.

In the first example shown in Fig. 1, the intermittent standby information is previously defined in the extension information element contained in the broadcast information by the intermittent reception extension information setting means 12c. In other words, as shown in Fig. 3, in the first example: the information element length (i.e., K) of the extension information contained in the broadcast information is defined to be K = 1; the intermittent standby information is defined by one information length, i.e., 1 octet; the 5th to the 8th bit contained in such 1 octet are used as an intermittent standby superframe interval (i.e., Pi) for determining an interval in the intermittent standby operation, while the 1st to the 4th bit contained in such 1 octet are used as an intermittent standby superframe counter (i . e. , Cs) for counting the number of the superframes.

This intermittent standby superframe interval (i.e., Pi) specifies the superframe interval with which the mobile station 15 performs its intermittent reception operation (hereinafter referred to as the high-efficiency intermittent reception operation) in the first example. The intermittent standby superframe interval (i.e. , Pi) is set at any one of values 1 to 15 in binary.

On the other hand, the intermittent standby superframe counter (i.e., Cs) is set for achieving synchronization and compensation of the superframe interval when the mobile station 15 performs the high-efficiency intermittent reception operation. Further, as shown in Fig. 4, a value of this intermittent standby superframe counter (i.e., Cs value) increases one by one from zero to a value of (Pi-1) each time the number of the superframes increases. When the value of this intermittent standby superframe counter (i.e., Cs value) reaches the value of (Pi-1), a value of a subsequent intermittent standby superframe counter (i.e., Cs value) is reset superframe counter (i.e., Cs value) is reset to zero. Incidentally, since the values of the intermittent standby superframe counter (i.e., Cs) differ in different superframes as described above, the contents of the broadcast information differ in different superframes. In this case, however, any operation for varying the broadcast information, which instructs the mobile station 15 to receive the broadcast information so as to ensure that the mobile station 15 receives such information without fail, is not performed.

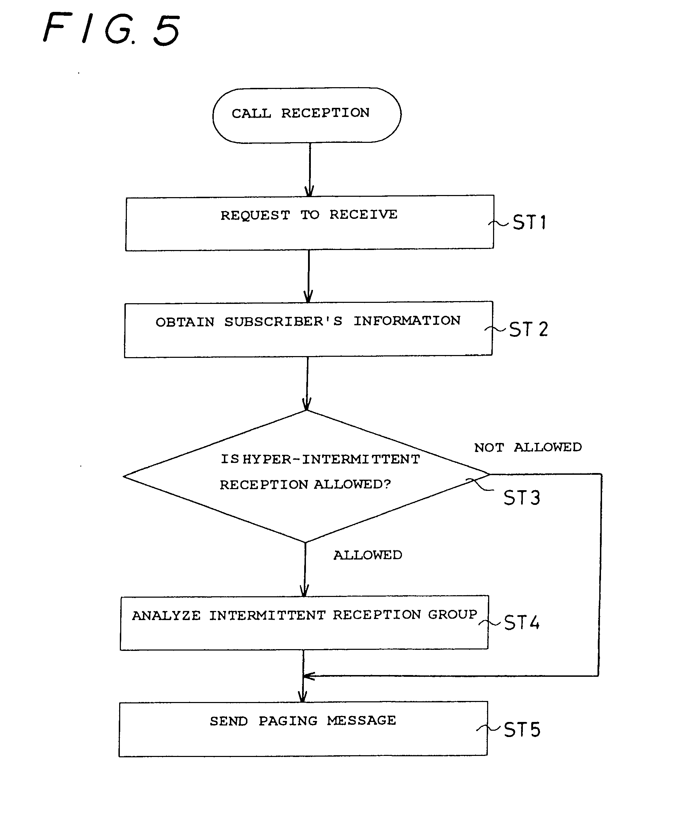

Now, the intermittent reception operation of the first example will be described with reference to the drawings, in which Fig. 5 is a flowchart illustrating an operation performed after the request-to-receive is made to the mobile station 15 in the first example .

As shown in Fig. 5, in a step ST1, a request-to-receive is made from another network 11 to the mobile station 15. The step ST1 is followed by a subsequent step ST2, in which the mobile communication switching unit 12a retrieves location information and subscriber's information from the subscriber's information memory 13, and concurrently retrieves information (i.e., flag indicating availability of the intermittent standby operation) from the intermittent standby allowed/not allowed information memory means 13a, which flag indicates whether or not the high-efficiency intermittent reception operation of the first example is available.

Then, the step ST2 is followed by a subsequent step ST3, in which the availability of the high-efficiency intermittent reception operation is judged by the subscriber's information discrimination means 12b on the basis of the information retrieved from the subscriber's information memory 13.

In the step ST3, when it is judged that the high-efficiency intermittent reception operation is available, the step ST3 is followed by a subsequent step ST4, in which, on the basis of the intermittent standby information previously set by the intermittent reception extension information setting means 12c and also based on the mobile station's number contained in the subscriber's information and like information, the intermittent reception group analyzing means 12d analyzes both the intermittent superframe reception group (i.e., Is) and the paging channel (i.e., PCH) of the control channel.

After completion of such analyzation, the step ST4 is followed by a subsequent step ST4, in which: in both the intermittent superframe reception group (i.e., Is) and the PCH group (i.e., Ip) of the control channel, the message sending means 12e sends out a paging message to the mobile station 15 through the mobile communication switching unit 12a and the base station 14.

On the other hand, in the step ST3, when the subscriber's information discrimination means 12b judges, on the basis of the information retrieved from the subscriber's information memory 13, that the high-efficiency intermittent reception operation is not available, the step ST3 goes to a step ST5. In the step ST5, the base station 14 sends out the paging message to the mobile station 15 which is not capable of performing the high-efficiency intermittent reception operation. In this case, within a cell, the control channel is often constructed of a plurality of radio channels.

Consequently, the paging channels (i.e., PCH) are grouped into the PCH group (i.e., Ip) for the intermittent reception operation of the mobile station 15. As for analysis of the intermittent superframe reception group (i.e., Is), for example, when "n" represents in decimal notation a value of the lower 2 octets of the mobile station's number, the intermittent superframe reception group (i.e., Is) is determined by the following calculation: namely
Is = n mod Pi the above calculation represents the remainder obtained by dividing the n by the Pi.

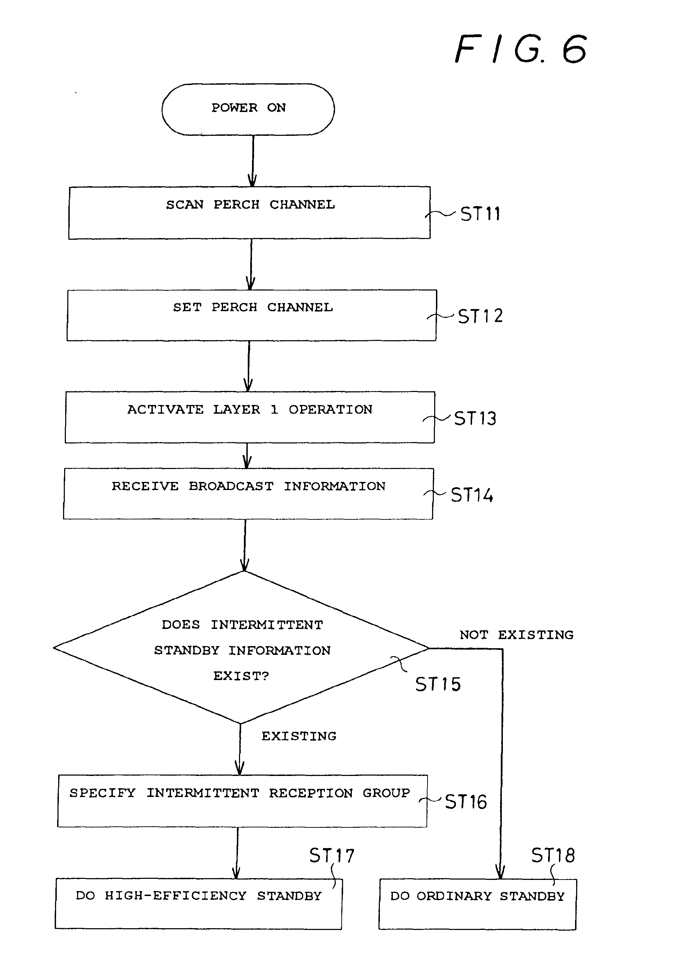

Fig. 6 is a flowchart illustrating an operation performed after the power source of the mobile station 15 is turned on, in which operation the mobile station 15 enters its standby mode in the first example .

In the flowchart shown in Fig. 6, when the power source of the mobile station 15 is turned on, perch channels stored in a ROM and like memory means of the mobile station 15 are scanned in a step ST11, as is in the case of the mobile station 15 not capable of performing the high-efficiency intermittent reception operation.

Then, the step ST11 is followed by a subsequent step ST12, in which a table of the channels each clearing a casting-out level is prepared in the order of channels, so that the perch channel is set. The step ST12 is immediately followed by a subsequent step ST13, in which a layer 1 operation is performed.

After that, the step ST13 is followed by a subsequent step ST14, in which the broadcast information is received. In receiving the broadcast information, also received are: message type; network number; restriction information; control channel structure information; and, like information. In addition to the above, further received are information elements of the intermittent standby information, provided that the information element length of the extension information (i.e., K) is not zero.

When a plurality of the control channels exist, the same reception operation as that in the above is performed in the control channel in which its own unit 15 should stay. Then, the step ST14 is followed by a subsequent step ST15, in which it is judged whether or not the intermittent standby information exists.

When both the information element length of the extension information (i.e., K) and the information element of the intermittent standby information exist in the broadcast information having been received, the step ST15 is followed by a subsequent step ST16, in which the intermittent reception group of its own unit 15 is specified on the basis of the value of the intermittent standby superframe interval (i.e., Pi) contained in the information element of the intermittent standby information.

After that, the step ST16 is followed by a subsequent step ST17, in which the hyper-intermittent reception operation is performed on the basis of the intermittent standby information. In the step 15, when the information element of the intermittent standby information is not contained in the broadcast information having been received, the step ST15 goes to a step ST18, in which an ordinary standby operation is performed. In this connection, the intermittent reception group is specified in the same manner as that used in determining the intermittent superframe reception group (i.e., Is) in the above.

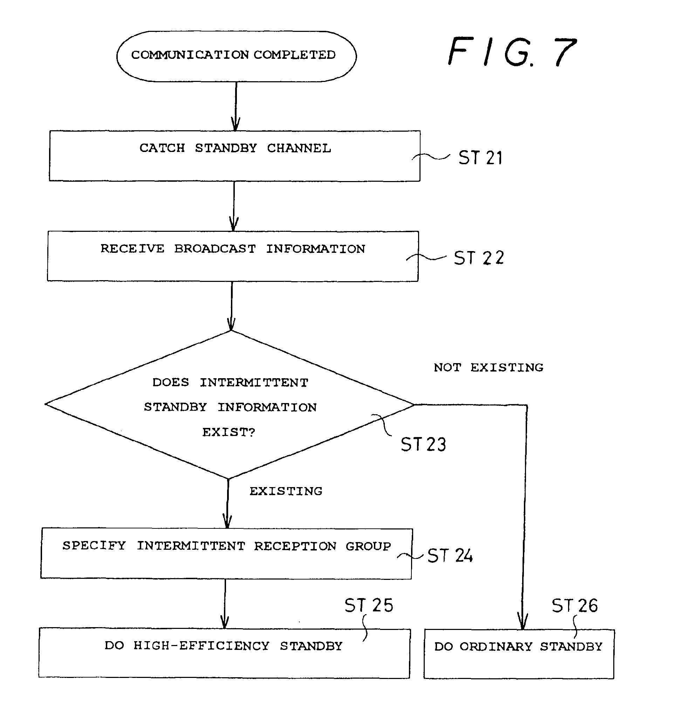

Fig. 7 is a flowchart illustrating an operation performed after completion of telecommunication of the mobile station 15, in which operation the mobile station 15 enters in its standby mode in the first example.

As shown in Fig. 7, after completion of telecommunication of the mobile station 15 in the first example, in a step ST21 the mobile station 15 catches a standby channel upon disconnection of such telecommunication, on the basis of the contents of a layer 3 system information message which is received when the telecommunication is disconnected.

After that, the step ST21 is followed by a subsequent step ST22, in which: the broadcast information is received as is in the flowchart of Fig. 6 starting from the POWER ON; in addition to reception of the message type, network number, restriction information, control channel structure information and like information, the information element of the intermittent standby information is received when the information element length of the extension information (i.e., K) is not zero. Further, in case that a plurality of the control channels exist, the same reception operation is performed in the control channel in which its own mobile station 15 should stays.

Then, the step ST22 is followed by a subsequent step ST23, in which it is judged whether or not the intermittent standby information exist. In case that the information element length of the extension information (i.e., K) is not equal to zero in the broadcast information having been received, and that the information element of the intermittent standby information exist in such broadcast information, the step ST23 is followed by a subsequent step ST24, in which the intermittent reception group of its own mobile station 15 is specified on the basis of a value of the intermittent standby superframe interval (i.e., Pi) contained in the information element of the intermittent standby information.

After that, the step ST24 is followed by a subsequent step ST25, in which the hyper-intermittent reception operation is performed based on the intermittent standby information. On the other hand, in the step ST23, when any information element of the intermittent standby information is not found in the broadcast information having been received, the step ST23 goes to a step ST26, in which an ordinary standby operation is performed.

Fig. 8(b) is a timing chart illustrating the intermittent reception operation of the mobile station 15 in its standby mode in the first example . Incidentally, in Fig. 8(b): the reference character BCCH denotes a broadcast channel; S a separate cell channel (i.e. , SCCH) ; and, P a paging channel (i.e., PCH).

As shown in Fig. 8(b), in the high-efficiency intermittent reception operation which is performed at a time of the POWER ON shown in Fig. 6 or performed after completion of telecommunication shown in Fig. 7, for example, when the value of the intermittent standby superframe interval (i.e., Pi) is 2 and the intermittent superframe reception group (i.e., Is) is zero, the operation is performed in a manner such that: zero, the operation is performed in a manner such that: the reception portion of the mobile station 15 is turned on so as to receive the paging channel when a value of the intermittent standby superframe counter (i.e., Cs) is zero; and, after two suerframe intervals (i.e., 720 milliseconds X 2), the reception portion of the mobile station 15 is turned on again.

Incidentally, the mobile station 15 performing the high-efficiency intermittent reception operation receives periodically the broadcast information for realizing synchronization of the intermittent standby superframe counter (i.e., Cs). At this time, though a timing in such periodical reception operation is arbitrarily determined, it is possible to perform such periodical reception operation at intervals of 5 minutes at maximum.

Further, in order to enable the mobile station 15 to perform the high-efficiency intermittent reception operation even when in roaming state, any roaming of the mobile station 15 into other network provider groups is not included here when availability of the high-efficiency intermittent reception operation is judged.

In the digital wireless telephone system 10 having the above construction, when a request-to-receive is made to the mobile station 15 which is capable of performing the high-efficiency intermittent reception operation, the telephone exchange retrieves both the location information and the subscriber's information from the subscriber's information memory 13, and further concurrently retrieves information from the intermittent standby allowed/not allowed information memory means 13a.

Then, the subscriber's information discrimination means 12b judges availability of the intermittent standby operation. As a result, when it is judged that the intermittent standby operation is available, the intermittent reception group analyzing means 12d specifies the intermittent reception group on the basis of both the intermittent standby superframe interval (i.e., Pi), which has been set in the intermittent reception extension information setting means 12c, and the intermittent standby superframe counter (i.e., Cs).

Then, the paging message is transmitted from the message sending means 12e to the mobile station 15 through both the mobile communication switching unit 12a and the base station 14 in the intermittent superframe reception group (i.e., Is) and the PCH group (i.e., Ip) of the control channel, which groups (i.e., Is and Ip) the mobile station 15 is waiting for. After its power source is turned on, the mobile station 15 performs its ordinary operations such as: a perch channel scanning operation; a perch channel setting operation; and, a layer 1 operation.

After that, the mobile station 15 receives the broadcast information in its ordinary broadcast information reception operation. Further, the mobile station 15 performs an additional reception operation for receiving the information element of the intermittent standby information when the value of the information element length of the extension information (i.e., K) is not equal to zero.

When the broadcast information having been received contains the information element of the intermittent standby information, the intermittent reception group is specified based on the intermittent standby superframe interval (i.e., Pi). Then, the mobile station 15 enters its high-efficiency intermittent reception mode in the thus specified intermittent reception group.

On the other hand, after completion or disconnection of telecommunication, the mobile station 15 catches a standby channel for performing the standby operation after such disconnection, on the basis of the contents of a layer 3 system information message obtained at a time of the disconnection.

After that, the ordinary broadcast information reception operation is performed as is in the above. In addition to such broadcast information reception operation, an additional reception operation is performed to receive both the information element of the extension information (i . e. , K) and the information element of the intermittent standby information.

In this case, when the information element of the intermittent standby information is contained in the broadcast information thus received, the intermittent reception group is specified on the basis of its intermittent standby superframe interval (i.e., Pi), so that the mobile station 15 enters the high-efficiency intermittent reception mode in such intermittent reception group.

Consequently, in the high-efficiency intermittent reception operation of the mobile station 15 in the first example, it is possible to perform the intermittent reception operation at intervals equal to 15 superframe intervals at maximum as to the intermittent standby superframe interval (i.e., Pi), on the basis of the intermittent standby information having been arbitrarily set. Consequently, it is possible to increase the continuous standby period of time of the mobile station 15, and, therefore possible to reduce its power consumption by increasing the interval of the intermittent reception operation.

Figs. 9(a) and 9(b) are timing charts each illustrating the intermittent standby operation based on measurement of the peripheral zone when the mobile station 15 performs its high-efficiency intermittent reception operation in the first example , wherein: Fig. 9 (a) shows the perch channels measured at two frequencies (i.e., f1 and f2) in the peripheral zone immediately after receipt of information of the paging channel (i.e., PCH) ; and, Fig. 9(b) shows the perch channels measured at a first and a second frequency (i.e., f1 and f2, respectively) in a first and a second superframe, respectively. Incidentally, in Figs. 9(a) and 9(b), the reference characters BCCH, S and P are the same as those described with reference to Figs. 8(a) and 8(b).

Now, a method for measuring a first peripheral zone will be described.

In this method, after the mobile station 15 receives the information of the paging channel (i.e., PCH) when in its high-efficiency intermittent reception mode, the perch channels of the peripheral zone are measured, provided that the number of the perch channels to be measured is the same value as that of the intermittent standby superframe interval (i.e., Pi).

For example, in case that the Pi is equal to 2 (i.e. , Pi = 2), as shown in Fig. 9(a), two frequencies (i.e., f1 and f2) of the perch channels in the peripheral zone are measured immediately after reception of the information of the paging channel (i.e., PCH). Further, in case that the Pi is equal to 3 (i.e., Pi = 3), three frequencies (i.e., f1, f2 and f3) of the perch channels in the peripheral zone are measured immediately after reception of the information of the paging channel (i.e., PCH).

Then, a method for measuring a second peripheral zone will be described. In this method, when the mobile station 15 is in the high-efficient intermittent reception mode, the perch channels in the peripheral zone are measured in each one of the superframes irrespective of any value of the intermittent standby superframe interval (i.e., Pi). For example, when the Pi is equal to 2 (i.e., Pi = 2), as shown in Fig. 9(b), one frequency (i.e., f1) of the perch channel is measured in the first superframe, and then another frequency (i.e., f2) is measured in the subsequent second superframe.

As for measurement of the peripheral zones, the mobile station 15 is capable of carrying out any one of the above methods for measuring the first and the second zones.

Incidentally, the above example has been described in a manner such that: the subscriber's information memory 13 is provided with the intermittent standby allowed/not allowed information memory means 13a; the flag indicating availability of the intermittent standby operation is stored in the intermittent standby allowed/not allowed information memory means 13a; and, the subscriber's information discrimination means 12b judges whether or not the intermittent standby operation of the mobile station 15 is available.

In the above example, however, it is also possible to eliminate both the intermittent standby allowed/not allowed information memory means 13a and the subscriber's information discrimination means 12b since the network is capable of calling up the mobile station 15 at any time slot, provided that the network can find out the time slot which the mobile station 15 is waiting for.

Further, in the above example , though: a length of the information element of the extension information (i.e., K) is defined to be equal to 1 (i.e., K = 1); and, the information elements of the intermittent standby information are defined in a manner such that a value of the intermittent standby superframe interval (i.e., Pi) is defined to be 4 bits and a value of the intermittent standby superframe counter (i.e., Cs) is defined to be 4 bits, all the above information elements are not necessarily defined as described above. In other words, they may be arbitrarily defined, if necessary.

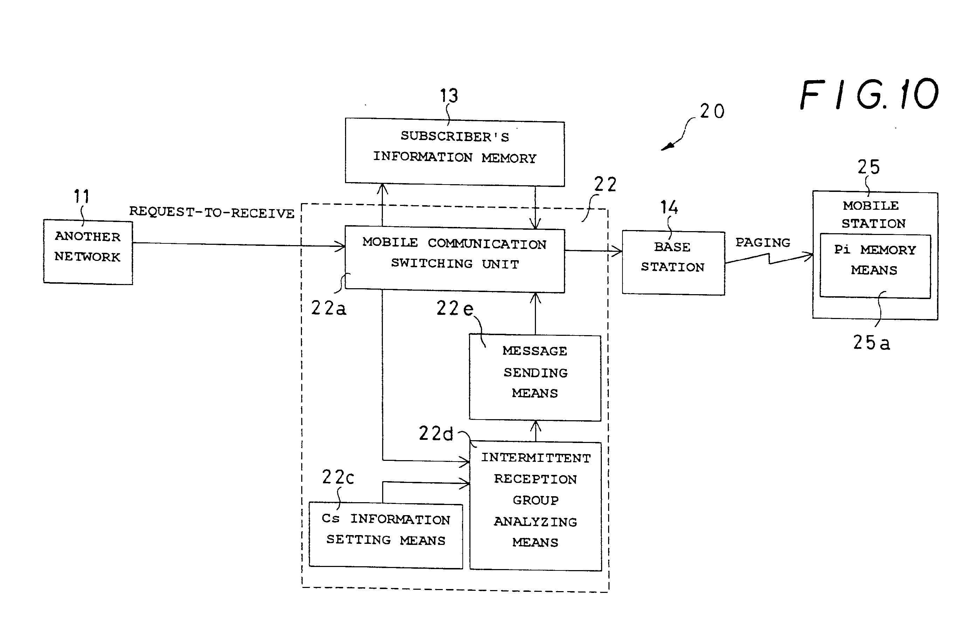

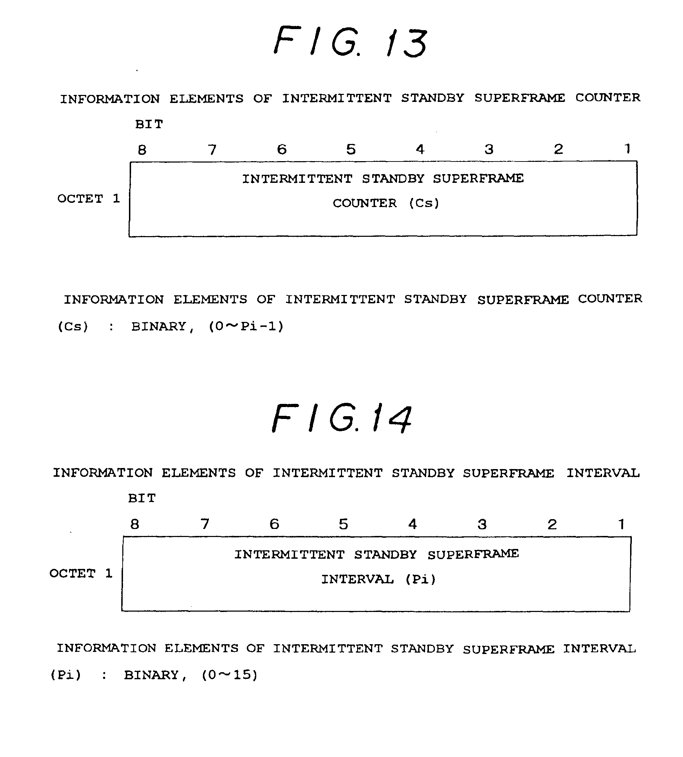

Fig. 10 is a schematic block diagram of the digital wireless telephone system 20 of a second example that corresponds to the embodiment of the present invention, and Fig. 13 is a diagram illustrating the information element of the intermittent standby superframe counter in the embodiment of the present invention. Incidentally, in Figs. 10 and 13, the parts which are the same as ones in Fig. 1 have been given the same reference numerals/characters and are not further explained.

In the digital wireless telephone system 20 of the present invention shown in Fig. 10, a telephone exchange 22 comprises: a mobile communication switching unit 22a for radio-controlling the base station 14 having a radio zone in which a mobile station 25 stays, the mobile communication switching unit 22a also providing a telecommunication service to the mobile station 25 through the base station 14; a Cs information setting means 22c for setting the intermittent standby superframe counter information contained in the broadcast information (i.e., BCCH information) which should be broadcast to all the mobile station 25 staying in the cell; an intermittent reception group analyzing means 22d for analyzing an intermittent reception group of the mobile stations 25 having received such information (i.e., BCCH) ; and, a message sending means 22e for sending paging information through the mobile communication switching unit 22a.

The mobile station 25 of the embodiment of the present invention is provided with a Pi memory means 25a for storing an intermittent standby superframe interval having been previously set. In this embodiment of the present invention, the intermittent standby superframe counter is previously set in the information element of the extension information by means of the Cs setting means 22c, which extension information is contained in the broadcast information.

In other words, as shown in Fig. 13, in the embodiment of the present invention: a length of the information element of the extension information (i.e., K) contained in the broadcast information is defined to be equal to 1 (i.e., K = 1); and, a length of the information element of the intermittent standby superframe counter (i.e., Cs) is defined to be equal to 1 octet. Such value of the intermittent standby superframe counter (i.e., Cs) increases from 0 (i.e., zero) to Pi-1 as is in the case of the first example . When the value of the intermittent standby superframe counter (i.e., Cs) reaches the Pi-1, a subsequent value of the counter (i.e., Cs) becomes 0 (i.e., zero). In construction, the remaining parts of the embodiment of the present invention are the same as those of the first example .

In the digital wireless telephone system 20 of the present invention having the above construction, when a request-to-receive is made to the mobile station 25: the telephone exchange 22 retrieves both the location information and the subscriber's information from the subscriber's information memory 13; the intermittent reception group analyzing means 22d analyzes both the intermittent superframe reception group (i.e., Is) and the PCH group; and, the message sending means 22e sends a message to the mobile station 25 through both the mobile communication switching unit 22a and the base station 14. After its power source is turned on, the mobile station 25 performs its ordinary operations such as: a perch channel scanning operation; a perch channel setting operation; and, a layer 1 operation.

After that, the mobile station 25 receives the broadcast information in its ordinary broadcast information reception operation. Further, the mobile station 25 performs an additional reception operation for receiving both the information element length of the extension information (i . e. , K) and the information element of the intermittent standby superframe counter.

In case that: the broadcast information having been received does not contain any of the information element length of the extension information (i.e., K) and the information element of the intermittent standby superframe counter; and, the high-efficiency intermittent reception operation is not available, the mobile station 25 performs an ordinary standby reception operation.

When the broadcast information having been received contains both the information element length of the extension information (i.e., K) and the information element of the intermittent standby superframe counter, the intermittent reception group of its own mobile station 25 is specified based on the value of the intermittent standby superframe interval having been stored in the Pi memory means 25a of the mobile station 25.

Then, the mobile station 15 enters the high-efficiency intermittent reception mode in the thus specified intermittent reception group. On the other hand, after completion or disconnection of telecommunication, the mobile station 25 catches a standby channel, which the mobile station 25 is waiting for after the above disconnection, on the basis of the contents of a layer 3 system information message obtained at a time of the disconnection of telecommunication.

After that, the ordinary broadcast information reception operation is performed as is in the above. In addition to such broadcast information reception operation, an additional reception operation is performed to receive both the information element length of the extension information (i.e., K) and the information element of the intermittent standby superframe counter.

In this case, when both the information element length of the extension information (i.e., K) and the information element of the intermittent standby superframe counter are contained in the broadcast information thus received, the intermittent reception group is specified on the basis of the intermittent superframe interval (i.e., Pi), so that the mobile station 25 enters the high-efficiency intermittent reception mode in such intermittent reception group.

Consequently, as is in the first example , the high-efficiency intermittent reception operation of the mobile station 25 is available also in the embodiment of the present invention. As a result, it is possible to increase the continuous standby period of time of the mobile station 25, and, therefore possible to reduce the power consumption of the mobile station 25.

In this embodiment of the present invention, the subscriber's information memory 13 is not required to have information as to availability of the high-efficiency intermittent standby operation of each of the subscribers. Incidentally, the same method for measuring the peripheral zone as that of the first example is also used in the embodiment of the present invention in a condition in which the mobile station 25 is in the high-efficiency intermittent standby mode. More particularly, the above method for measuring the peripheral zone may be either the method for measuring the first peripheral zone or the method for measuring the second peripheral zone.

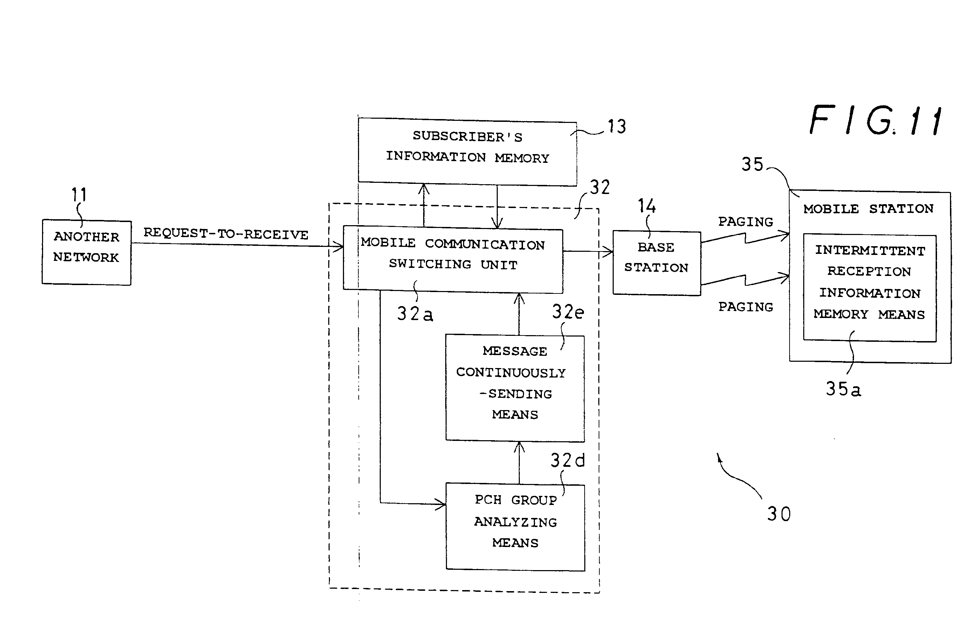

Fig. 11 is a schematic block diagram of the digital wireless telephone system of a third example . Incidentally, in Fig. 11, the parts, which are the same as ones in Fig. 1 showing the first example, have been given the same reference numerals/characters and are not further explained.

In the digital wireless telephone system 30 shown in Fig. 11, a telephone exchange 32 comprises: a mobile communication switching unit 32a for radio-controlling the base station 14 having a radio zone in which a mobile station 35 stays, the mobile communication switching unit 32a also providing a telecommunication service to the mobile station 35 through the base station 14; a PCH group analyzing means 32d for analyzing the paging channel group; and, a message continuously-sending means 32e for continuously sending the paging message through the mobile communication switching unit 32a for a period of time equal to a plurality of superframes, the number of which is the same as that of the Pi's.

Further, the mobile station 35 of the third example is provided with an intermittent reception information memory means 35a, which stores intermittent reception information such as an intermittent standby superframe interval and like information having been previously set. In construction, the remaining parts of the third example are the same as those of the first example.

In the digital wireless telephone system 30 having the above construction, when a request-to-receive is made to the mobile station 35, the telephone exchange 32 specifies, as is in the case of an ordinary telephone call, a radio zone in which the mobile station 35 thus called stays. After completion of specifying the radio zone, the PCH group is analyzed by the PCH group analyzing means 32d. The message continuously-sending means 32e continuously sends the paging message to the mobile station 35 through both the mobile communication switching unit 32a and the base station 14 for a period of time equal to a plurality of superframes, the number of which is the same as that of the Pi's.

After its power source is turned on, the mobile station 35 performs its ordinary operations such as: a perch channel scanning operation; a perch channel setting operation; and, a layer 1 operation. After that, the mobile station 35 receives the broadcast information in its ordinary broadcast information reception operation.

Further, the mobile station 35 compares the network number and the like with the high-efficiency intermittent reception information having been stored in the intermittent reception information memory means 35a.

When the high-efficiency intermittent reception operation is available, the mobile station 35 initiates the high-efficiency intermittent reception operation.

On the other hand, after completion or disconnection of telecommunication, the mobile station 35 catches a standby channel, which the mobile station 35 is waiting for after the above disconnection, on the basis of the contents of a layer 3 system information message obtained at a time of the disconnection of telecommunication.

After that, when the high-efficiency intermittent reception operation is available, the mobile station 35 initiates the high-efficiency intermittent reception operation. On the other hand, when the high-efficiency intermittent reception operation is not available, the mobile station 35 performs an ordinary standby reception operation.

Consequently, as is in the first example , the high-efficiency intermittent reception operation of the mobile station 35 is available also in the third example.

As a result, it is possible to increase the continuous standby period of time of the mobile station 35, and, therefore possible to reduce the power consumption of the mobile station 35.

In this third example, it is possible for the mobile station 35 to perform the high-efficiency intermittent reception operation without involving any time delay for a telephone call when the telephone exchange 32 continuously sends the paging message for a period of time equal to a plurality of the superframes, the number of which is the same as that of the Pi's.

Further, in the side of the network, there is no need for specifying the intermittent superframe reception group (i.e., Is). Incidentally, the same method for measuring the peripheral zone as that of the first or the second example is also used in the third example in a condition in which the mobile station 35 is in the high-efficiency intermittent reception mode. More particularly, the above method for measuring the peripheral zone may be either the method for measuring the first peripheral zone or the method for measuring the second peripheral zone.

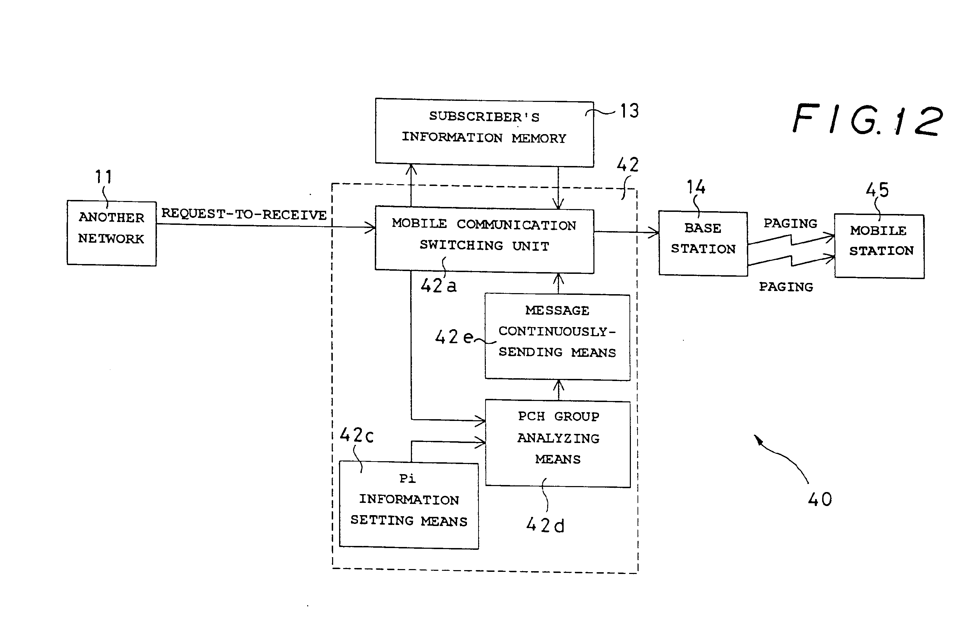

Fig. 12 is a schematic block diagram of the digital wireless telephone system 40 of a fourth example, and Fig. 12 is a diagram illustrating the information element of the intermittent standby superframe interval in the fourth example. Incidentally, in Fig. 12, the parts which are the same as ones in Fig. 1 have been given the same reference numerals/characters and are not further explained.

In the digital wireless telephone system 40 shown in Fig. 14, a telephone exchange 42 comprises: a mobile communication switching unit 42a for radio-controlling the base station 14 having a radio zone in which a mobile station 45 stays, the mobile communication switching unit 42a also providing a telecommunication service to the mobile station 45 through the base station 14; a Pi information setting means 42c for setting the intermittent standby superframe interval information contained in information (i.e., BCCH information) which should be broadcast to all the mobile station 45 staying in the cell; a PCH group analyzing means 42d for analyzing the paging channel group; and, a message continuously-sending means 42e for continuously sending the paging message through the mobile communication switching unit 42a for a period of time equal to a plurality of superframes, the number of which is the same as that of the Pi's.

Further, in this fourth example , the intermittent standby superframe interval is previously set by means of the Pi setting means 42c in the information element of the extension information contained in the broadcast information.

In other words, as shown in Fig. 14, in the fourth example: a length of the information element of the extension information (i.e., K) contained in the broadcast information is defined to be equal to 1 (i.e., K = 1); and, a length of the information element of the intermittent standby superframe interval (i.e. , Pi) is defined to be equal to 1 octet. In construction, the remaining parts of the fourth example are the same as those of the first example.

In the digital wireless telephone system 40 having the above construction, when a request-to-receive is made to the mobile station 45: the telephone exchange 42 specifies a radio zone in which the mobile station 45 thus called stays.

After completion of specifying the radio zone, the PCH group is analyzed by the PCH group analyzing means 42d. The message continuously-sending means 42e continuously sends the paging message to the mobile station 45 through both the mobile communication switching unit 42a and the base station 14 for a period of time equal to a plurality of superframes, the number of which is the same as that of the Pi's.

After its power source is turned on, the mobile station 45 performs its ordinary operations such as: a perch channel scanning operation; a perch channel setting operation; and, a layer 1 operation. After that, the ordinary broadcast information reception operation is performed. In addition to such broadcast information reception operation, an additional reception operation is performed to receive both the information element length of the extension information (i.e., K) and the information element of the intermittent standby superframe interval.

In this case, when both the information element length of the extension information (i.e., K) and the information element of the intermittent standby superframe interval are contained in the broadcast information thus received, the mobile station 45 performs its high-efficiency intermittent reception operation on the basis of a value of the Pi in the information element of the intermittent standby superframe interval. At this time, the network continuously sends out the paging signal for a period of time equal to a plurality of the superframes, the number of which is the same as that of the Pi's.

Consequently, in the mobile station 45 there is no need for synchronization of such superframes. On the other hand, after completion or disconnection of telecommunication, the mobile station 45 catches a standby channel, which the mobile station 35 is waiting for after the above disconnection, on the basis of the contents of a layer 3 system information message obtained at a time of the disconnection.

After that, the ordinary broadcast information reception operation is performed. In addition to such broadcast information reception operation, an additional reception operation is performed to receive both the information element length of the extension information (i.e., K) and the information element of the intermittent standby superframe interval.

When both the information element length of the extension information (i.e., K) and the information element of the intermittent standby superframe interval are contained in the broadcast information thus received, the mobile station 45 performs its high-efficiency intermittent standby reception operation on the basis of the value of the Pi. At this time, as is in the above, the network is not required to synchronize all the superframes.

Incidentally, when the high-efficiency intermittent reception operation is not available, the mobile station 45 performs an ordinary standby reception operation. Consequently, as is in the first example, the mobile station 45 is capable of performing the high-efficiency intermittent reception operation in the fourth example. As a result, it is possible to increase the continuous standby period of time of the mobile station 45, which reduces the power consumption of the mobile station 45.

In this fourth example , the telephone exchange 42 continuously sends out the paging message for a period of time equal to a plurality of the superframes, the number of which is the same as that of the Pi's. Consequently, it is possible for the mobile station 45 to perform the high-efficiency intermittent reception operation without involving any time delay for a telephone call.

Further, in the side of the network, there is no need for specifying the intermittent superframe reception group (i.e., Is). Incidentally, the same method for measuring the peripheral zone as that of the first or the second example is also used in the fourth example in a condition in which the mobile station 45 is in the high-efficiency intermittent reception mode. More particularly, the above method for measuring the peripheral zone may be either the method for measuring the first peripheral zone or the method for measuring the second peripheral zone.

As described above, in the present invention having the above construction, the mobile station performs the high-efficiency intermittent reception operation, which increases the interval in the intermittent reception operation, and, therefore increases the continuously standby period of time of the mobile station, so that the power consumption of the mobile station is reduced.

## Claims

1. Method for reducing the power consumption of a digital wireless telephone system (20) comprising a mobile station (25) provided with a reception portion, the power source of which being turned on in timed relationship with a paging channel contained in a sending signal issued from a telephone exchange (22) to the mobile station through a base station (14), and turned off in the remaining period of time, this operation being referred hereafter as intermittent standby operation, the method comprises the steps of:
sending out a paging message from the telephone exchange in a group of paging channels in a group of superframes, for which groups the mobile station is waiting, the group of paging channels and the group of superframes being respectively referred to as the paging channel group and the intermittent superframe reception group of the mobile station,
receiving broadcast information by the mobile station, and deciding that the intermittent standby operation is able to be performed by the mobile station or not based on extension information in the broadcast Information, the extension information being defined as an extension Information element length and an intermittent standby information element comprising an intermittent standby superframe counter,
performing the intermittent standby operation in the intermittent superframe reception group by the mobile station based on preset intermittent standby operation information in the mobile station, when a result of the decision is affirmative; wherein, the preset intermittent standby operation information containing a preset intermittent standby superframe interval,
**characterized by** the further step of:
turning on the power source of the reception portion of the mobile station to measure a perch channel in a peripheral zone each time the superframe appears.

2. Method according to claim 1, wherein
an intermittent standby superframe counter information element in the extension information element contained in the broadcast information is set by an intermittent standby superframe counter setting means (22c) of the telephone exchange (22),
the intermittent superframe deception group of the mobile station (25) is analyzed by an intermittent superframe reception group analyzing means (22d) on the basis of a location information and a subscriber's information read out from a subscribers information memory (13),
and
the paging message in the intermittent superframe reception group and the paging channel group, for which groups the mobile station is waiting, is sent out by a message sending means (22e) and the Intermittent standby operation information containing a preset intermittent standby superframe interval being stored in a memory means (25a) of the mobile station (25).

## Patentansprüche

1. Verfahren zur Reduktion des Stromverbrauchs in einem digitalen drahtlosen Telefonsystem (20), umfassend eine Mobilstation (25) ausgestattet mit einem Empfangsteil, dessen Stromquelle in einem zeitlich koordinierten Zusammenhang mit einem Funkrufkanal, der in einem Sendesignal enthalten ist, das von einer Vermittlungsstelle (22) zu der Mobilstation über eine Basisstation (14) ausgestrahlt wird, eingeschaltet wird, und in der übrigen Zeit ausgeschaltet ist, wobei dieser Betrieb im Folgenden als intermittierender Standbybetrieb bezeichnet wird, wobei das Verfahren die Schritte umfasst:
Aussenden einer Funkrufnachricht von der Telefonvermittlungsstelle in einer Gruppe von Funkrufkanälen in einer Gruppe von Superframes, auf welche Gruppe die Mobilstation wartet, wobei die Gruppe von Funkrufkanälen und die Gruppe von Superframes als die Funkrufkanalgruppe bzw. die intermittierende Superframeempfangsgruppe der Mobilstation bezeichnet wird,
Empfangen von Rundsendeinformation durch die Mobilstation, und Entscheiden, dass der intermittierende Standbybetrieb durch die Mobilstation oder nicht basierend auf Erweiterungsinformation in der Rundsendeinformation durchgeführt werden kann, wobei die Erweiterungsinformation als eine Erweiterungsinformationselementlänge und ein intermittierendes Standbyinformationselement definiert ist, das einen intermittierenden Standbysuperframezähler umfasst,
Durchführen des intermittierenden Standbybetriebs in der intermittierenden Superframeempfangsgruppe durch die Mobilstation, basierend auf voreingestellter intermittierender Standbybetriebsinformation in der Mobilstation, wenn ein Ergebnis der Entscheidung zustimmend ist; wobei die voreingestellte intermittierende Standbybetriebsinformation ein voreingestelltes intermittierendes Standbysuperframeintervall enthält,
**gekennzeichnet durch** den weiteren Schritt
Einschalten der Stromquelle des Empfangsabschnitts der Mobilstation zur Messung eines Perch-Kanals in einer umgebenden Zone, jedes Mal, wenn der Superframe erscheint.

2. Verfahren nach Anspruch 1 , wobei
ein intermittierendes Standbysuperframezählerinformationselement in dem Erweiterungsinformationselement, das in der Rundsendeinformation enthalten ist, durch ein intermittierendes Standbysuperframezählereinstellmittel (22c) der Telefonvermittlungsstelle (22) eingestellt wird,
die intermittierende Superframeemfangsgruppe der Mobilstation (25) durch ein intermittierendes Superframeempfanggruppenanalysiermittel (22d) auf der Basis einer Ortsinformation und einer Teilnehmerinformation, die aus einem Teilnehmerinformationsspeicher (13) ausgelesen wird, analysiert wird
und
die Funkrufnachricht in der intermittierenden Superframeempfangsgruppe und der Funkrufkanalgruppe, auf welche Gruppen die Mobilstation wartet, durch ein Nachrichtensendemittel (22e) ausgesendet wird, und die intermittierende Standbybetriebsinformation, die ein voreingestelltes intermittierendes Standbysuperframeintervall enthält, das in einem Speichermittel (25a) der Mobilstation (25) gespeichert ist.

## Revendications

1. Procédé de réduction de la consommation d'énergie d'un système numérique de téléphone sans fil (20) comprenant une station mobile (25) munie d'une partie de réception, dont la source d'énergie est activée dans une relation temporelle accordée à un canal PCH contenu dans un signal d'émission émis à partir d'un central téléphonique (22) vers la station mobile via une station de base (14) et désactivée pendant la période restante, cette opération étant appelée au suivant opération de veille intermittente, le procédé comprenant les étapes suivantes :
envoi d'un message de radiomessagerie à partir d'un central téléphonique dans un groupe de canaux PCH dans un groupe de supertrames, lesquels groupes sont attendus par la station mobile, le groupe de canaux PCH et le groupe de supertrames étant respectivement appelés groupe de canaux PCH et groupe de réception intermittente de supertrames de la station mobile,
réception d'informations de diffusion par la station mobile et décision si l'opération de veille intermittente est susceptible d'être réalisée par la station mobile ou non sur la base d'informations d'extension dans les informations de diffusion, les informations d'extension étant définies comme une longueur d'élément d'informations d'extension et un élément d'informations de veille intermittente comprenant un compteur de supertrames de veille intermittente,
réalisation de l'opération de veille intermittente dans le groupe de réception intermittente de supertrames par la station mobile sur la base des informations d'opération de veille intermittente prédéterminées dans la station mobile si un résultat de la décision est affirmatif ; les informations d'opération de veille intermittente contenant un intervalle de supertrames de veille intermittente prédéterminé,
**caractérisé par** l'autre étape suivante :
activation de la source d'énergie de la partie de réception de la station mobile pour mesurer un canal porteur dans une zone périphérique chaque fois qu'une supertrame apparaît.

2. Procédé selon la revendication 1, dans lequel
un élément d'informations de compteur de supertrames de veille intermittente dans l'élément d'informations d'extension contenu dans les informations de diffusion est réglé par un moyen de réglage de compteur de supertrames de veille intermittente (22c) du central téléphonique (22),
le groupe de réception intermittente de supertrames de la station mobile (25) est analysé par un moyen d'analyse de groupe de réception intermittente de supertrames (22d) sur la base d'une information d'emplacement et d'une information d'abonné sortie d'une mémoire d'informations d'abonné (13),
et
le message de radiomessagerie dans le groupe de réception intermittente de supertrames et le groupe de canaux de PCH, lesquels groupes sont attendus par la station mobile, est émis par un moyen d'émission de messages (22e) et l'information d'opération de veille intermittente contenant un intervalle de supertrame de veille intermittente prédéterminé est mémorisée dans un moyen de mémoire (25a) de la station mobile (25).
